# EUROPEAN PATENT APPLICATION

(11) **EP 0 748 964 A1**
(43) Date of publication of application: **18.12.1996**
(21) Application number: 96109513.0
(22) Date of filing: 13.06.1996
(51) Int. Cl.: F16H 61/36

(54) **Vehicle gearbox control device**

(30) Priority: 16.06.1995 IT TO950506
(71) Applicant: ROLTRA MORSE S.p.A., I-86077 Pozzilli (IT)
(72) Inventor: Bravo, Ernesto, 10020 Cambiano (IT)
(74) Representative: Franzolin, Luigi

(57) **Abstract**

A vehicle gearbox control device (1) presenting a supporting element (2) fitted to the vehicle body; an intermediate element (4) rotatable in relation to the supporting element (2) about a first axis (A); and a control lever (5) fitted to and rotatable in relation to the intermediate element (4) about a pin (24) defining a second axis (B) perpendicular to the first axis (A); the intermediate element (4) presenting two integral end pins (9) defining the first axis (A), and which rotate inside respective seats (60) formed in the supporting element (2) and presenting a radial opening (62) for inserting the respective pin (9) crosswise to the first axis (A); the pins (9) being locked inside the respective seats (60) by respective fast-fit elements (64).

## Description

The present invention relates to a vehicle gearbox control device, or more specifically to a gearshift control device.

Known gearshift control devices substantially comprise a supporting element fitted to a vehicle body element; an intermediate element rotatable in relation to the supporting element about a first axis; and a control lever fitted to and rotatable in relation to the intermediate element about a pin defining a second axis perpendicular to the first axis.

Rotation of the control lever about the first and second axes is transmitted to the gearbox via respective transmission members, to respectively control selection and engagement of the gears.

Devices of the type briefly described above normally comprise a large number of components, and are therefore fairly expensive and complex to produce and assemble.

In particular, the supporting element and the intermediate element are connected by means of at least one pin constituting a separate component, which must be inserted axially through respective holes in said elements, and locked in relation to said elements by means of further auxiliary components.

Moreover, since the main components of the device are normally made of metal, the overall weight of the device is considerable.

It is an object of the present invention to provide a gearshift control device designed to overcome the aforementioned drawbacks typically associated with known devices.

According to the present invention, there is provided a vehicle gearbox control device comprising:
a supporting element fitted to the vehicle body;
an intermediate element;
hinge connecting means for hinging said intermediate element to said supporting element, and defining a first axis of rotation of said intermediate element in relation to said supporting element; and
a control lever fitted to and rotatable in relation to said intermediate element about a pin defining a second axis of rotation perpendicular to said first axis;
characterized in that said hinge connecting means for hinging said intermediate element to said supporting element comprise at least one pin integral with one of said elements; a corresponding seat formed in the other of said elements, and presenting a radial opening for inserting said pin crosswise in relation to said first axis; and fast-fit means for locking said pin inside said seat.

A preferred, non-limiting embodiment of the present invention will be described by way of example with reference to the accompanying drawings, in which:
Figure 1 shows a side view of a gearshift control device in accordance with the teachings of the present invention;
Figure 2 shows a section along line II-II in Figure 1;
Figure 3 shows a partial opposite side view of the Figure 1 device;
Figure 4 shows a larger-scale, partially sectioned side view of a detail of the Figure 1 device;
Figure 5 shows a section along line V-V in Figure 4;
Figures 6 and 7 show sections, as in Figure 5, of respective variations of the Figure 4 detail;
Figure 8 shows a partially sectioned front view of a further variation of the Figure 4 detail;
Figure 9 shows a partial side view of the Figure 8 detail.

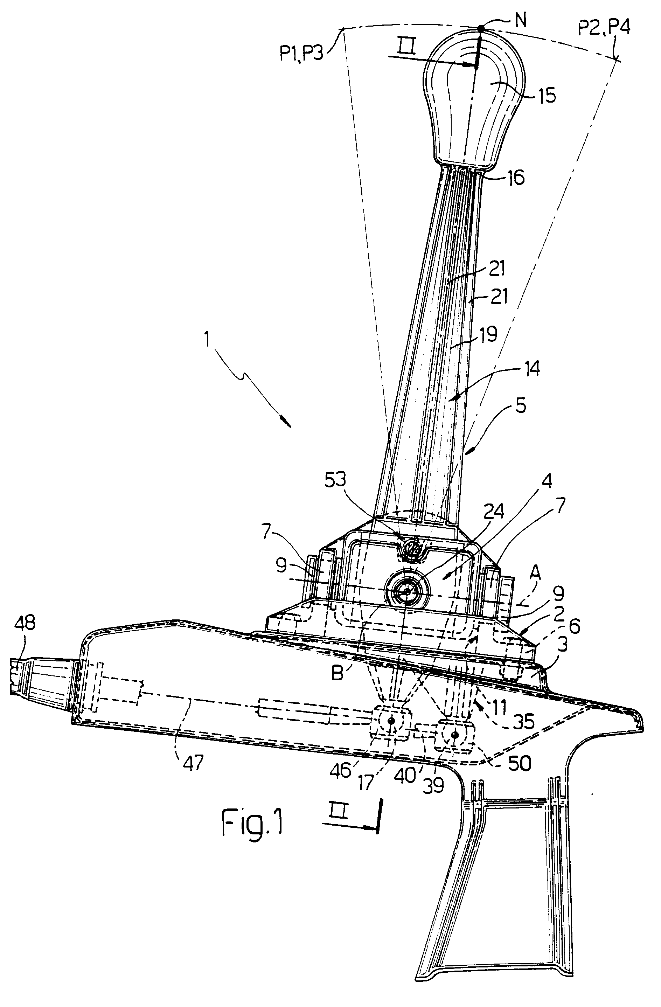

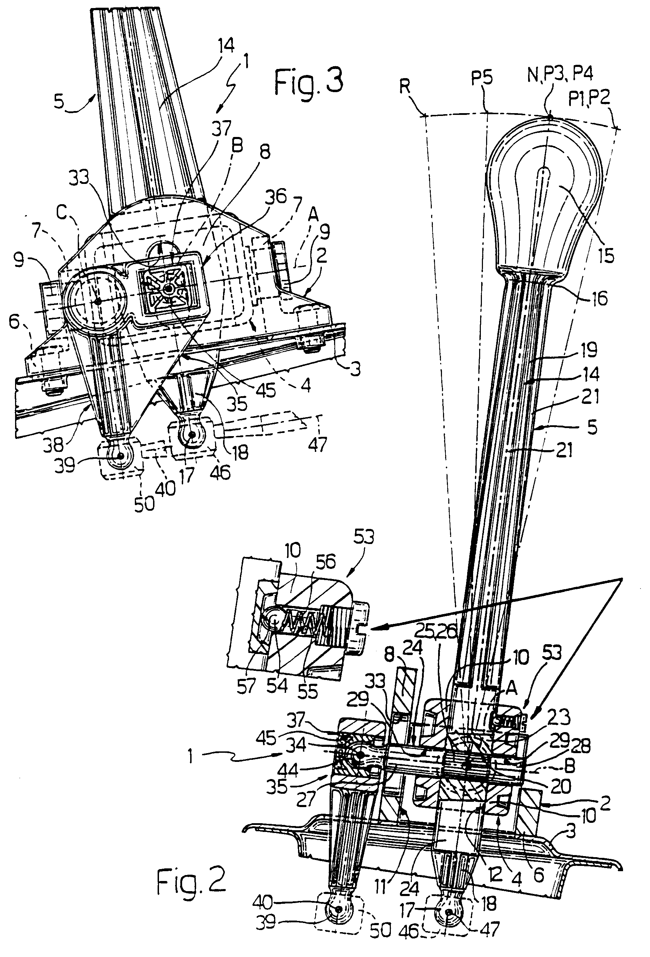

Number 1 in Figures 1 and 2 indicates a control device for a vehicle gearbox (not shown).

Device 1 substantially comprises a fixed supporting element 2 fitted rigidly to a vehicle body element 3; an intermediate element 4 rotatable in relation to supporting element 2 about a first axis A; and a control lever 5 fitted to intermediate element 4 and rotatable in relation to it about a second axis B perpendicular to axis A.

Lever 5 is thus rotatable, in relation to fixed supporting element 2, about axis A (fixed) and axis B (movable with intermediate element 4); axis A is substantially longitudinal in relation to the vehicle, and rotation about it provides for selecting the gears; axis B is crosswise to the vehicle, and rotation about it by lever 5 provides for engaging or disengaging the gears; and operation of lever 5 is transmitted to the gearbox (not shown) by linkage means described later on.

Supporting element 2 presents a substantially frame-like anchoring base 6 defining a central opening 11, and from which respective walls 7 extend upwards from the front and rear sides, and a lateral wall 8 extends upwards from one longitudinal side.

Intermediate element 4 is substantially parallelepiped, and is housed between and hinged to walls 7 by respective end pins 9 of axis A.

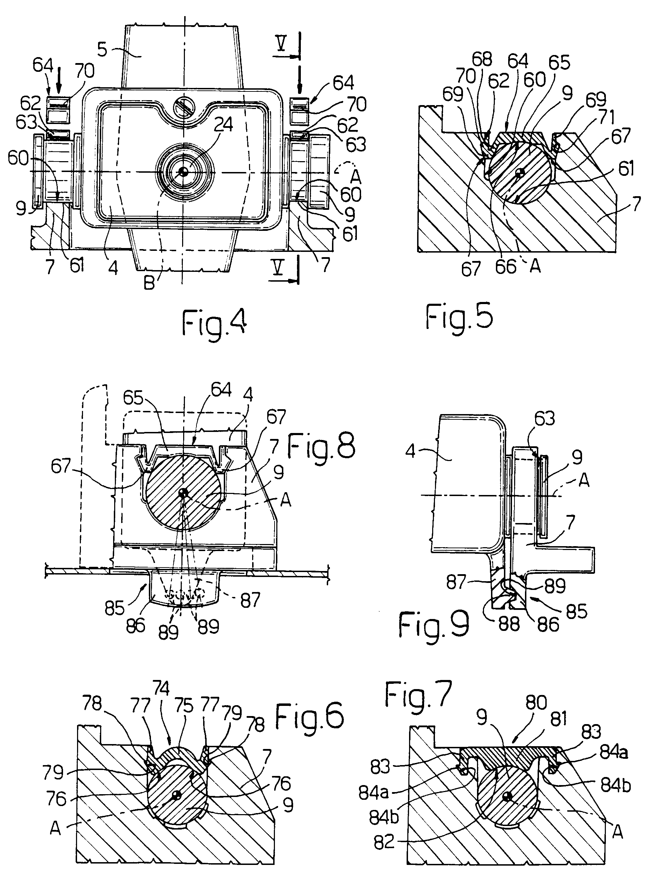

According to the present invention, pins 9 extend integrally from intermediate element 4, and engage respective cradle seats 60 (Figures 4 and 5) in lateral walls 7.

More specifically, seats 60 present a substantially cylindrical bottom surface 61 for supporting pins 9; and respective upward-facing radial openings 62 for inserting pins 9 transversely to axis A. Pins 9 cooperate with seats 60 at respective annular grooves 63, one of which is engaged with a small amount of axial clearance by respective wall 7 to define a precise axial position of intermediate element 4.

Pins 9 are locked inside respective seats 60 by fast-fit elements 64 snapped inside respective openings 62.

According to a first embodiment shown in Figure 5, elements 64 comprise an intermediate portion 65 elongated crosswise to axis A, and presenting a bottom impression 66 cooperating with the bottom surface of groove 63 of respective pin 9 diametrically opposite the bottom surface 61 of respective seat 60. Elements 64 also comprise a pair of flexible lateral retaining portions 67 extending integrally from opposite ends of intermediate portion 65, and each comprising a first arm 68 and a second arm 69 connected to each other substantially in a V. First arm 68 is integrally connected at one end to intermediate portion 65; second arm 69 presents, on its outer face, a tooth 70 for engaging a respective seat 71 formed in opening 62 of seat 60; and portions 67, when assembled, are positioned contacting respective pin 9 (Figure 5) to define a further two portions for radially retaining pin 9.

Supporting element 2 and intermediate element 4 are conveniently molded from plastic material.

Intermediate element 4 (Figure 2) presents a longitudinal through opening 12 perpendicular to axes A and B, defined laterally by two parallel lateral walls 10 of intermediate element 4, and presenting a cross section (in a plane parallel to axes A and B) in the form of an elongated rectangle extending in the direction of axis A.

Lever 5 (Figures 1 and 2) is molded in one piece from plastic material, and comprises a rod 14 fitted through opening 12 in intermediate element 4; a grip 15 integral with the top end 16 of rod 14; and a spherical articulating head 17 extending from the bottom end 18 of rod 14, and for connecting rod 14 to an engagement control cable 47, as described later on.

Rod 14 comprises a substantially elliptical-section top portion 19 tapering towards grip 15 and presenting longitudinal cross ribs 21; and a substantially rectangular-section bottom portion 23 housed in sliding manner with a small amount of lateral clearance inside opening 12, and presenting a transverse through hole 20, of axis B, defining a seat for a pin 24 permitting rod 14 to pivot in relation to intermediate element 4 (Figure 2).

Pin 24 presents an intermediate portion 25 with grooves 26, which is interference fitted inside hole 20 so that it is rigidly connected to lever 5; and axial end portions 27, 28 engaging in radially slack manner respective holes 29, of axis B, formed in the lateral walls 10 of intermediate element 4.

One (27) of the two axial end portions extends axially outwards of intermediate element 4 and beyond lateral wall 8 of supporting element 2 - which, for the purpose, presents a vertically elongated opening 33 - to form a spherical end head 34 which acts as an articulating element for controlling a linkage lever 35.

Lever 35 is made of plastic material, is substantially square, and is hinged to lateral wall 8 of supporting element 2 to pivot about an axis C (Figure 3) perpendicular to axis A, crosswise to the vehicle, and shifted rearwards in relation to axis B.

Lever 35 presents an arm 36 extending frontwards in a substantially longitudinal direction in relation to the vehicle, and connected to head 34 of pin 24 by an articulating element 37; and an arm 38 extending substantially downwards, and presenting a spherical end head 39 for connection to a gear selection control cable 40 as described later on.

Articulating element 37 comprises a parallelepiped block of plastic material with a low friction coefficient, and presenting a spherical seat 44 cooperating with head 34 of pin 24. Block 37 is housed in sliding manner inside an opening 45 in arm 36, and is permitted to move axially and radially in relation to axis C, but with no tangential slack in relation to it.

Spherical head 17 of lever 5 cooperates in known manner with an articulating element 46 (shown by the dotted line) presenting a complementary spherical seat, and fitted to one end of engagement control cable 47. Cable 47 is a Bowden cable, and presents a sheath 48 with one end fitted to vehicle body element 3 and substantially parallel to axis A.

Similarly, spherical head 39 of linkage lever 35 cooperates with an articulating element 50 (shown by the dotted line in Figures 1, 2, 3) presenting a complementary spherical seat, and fitted to one end of selection control cable 40. Cable 40 is a Bowden cable, and presents a sheath (not shown) with one end fitted to vehicle body element 3 and also substantially parallel to axis A.

With reference to Figure 2, number 53 indicates a device for stabilizing the relative position of control lever 5 and intermediate element 4. Device 53 substantially comprises a ball 54 housed inside a transverse hole 55 in a lateral wall 10 of intermediate element 4, and pushed by a spring 56 onto lever 5; and a number of impressions 57 formed on lever 5 and so located as to correspond with the neutral and gear engagement positions.

Device 1 operates as follows.

To select a given gear, grip 15 of control lever 5 is shifted laterally (Figure 2) to rotate lever 5, pin 24 integral with lever 5, and intermediate element 4 about axis A; the rotation of pin 24 about axis A crosswise to it produces an upward or downward movement, along an arc of a circle, of spherical head 34 which, via articulating element 37, transmits the movement to linkage lever 35; and lever 35 rotates about axis C to activate relative cable 40 to shift the relative selection members inside the gearbox. The selection positions relative to a five-speed plus reverse gearbox are shown in Figure 2, in which the numbers preceded by the letter P indicate the corresponding gears, N indicates the neutral position, and R the reverse gear.

Once the required selection position is reached, the relative gear is engaged by moving grip 15 of lever 5 forwards or backwards to rotate lever 5 about axis B and so activate cable 47. The neutral and engaged positions shown in Figure 1 using the same references as in Figure 2 are stabilized by device 53.

Figures 6 and 7 show alternative embodiments of the fast-fit elements.

More specifically, the fast-fit element 74 in Figure 6 comprises a curved intermediate portion 75 defining, at each end, respective rest portions 76 for respective pin 9. On the opposite side to rest portions 76, two flexible arms 77 extend from said ends of intermediate portion 75, and present respective outer teeth 78 for connection to seat 60.

The fast-fit element 80 in Figure 7 presents an intermediate portion 81 defining a central saddle rest 82 cooperating with pin 9. From the opposite ends of intermediate portion 81 and on the same side as central rest 82, two appendixes 83 with respective outer end teeth 84a extend perpendicularly to portion 81, and snap inside respective seats 84b formed in wall 7 of supporting element 2, on either side of seat 60.

Finally, Figures 8 and 9 show a variation of device 1, presenting a selection position stabilizing device 85. Device 85 substantially comprises an appendix 86 extending downwards from a wall 7 of supporting element 2; and a flexible tab 87 projecting from one end of intermediate element 4 and crosswise to axis A. Appendix 86 and tab 87 face each other in the direction of axis A; tab 87 presents a projection 88 facing appendix 86; and appendix 86 presents a number of recesses 89 spaced along a circumference with its center at axis A, and so located as to be engaged by projection 88 when lever 5 and intermediate element 4, integral with lever 5 when rotated about axis A, are set to one of the selection positions or to the neutral position shown in Figure 2.

The advantages of the gearshift control device according to the present invention will be clear from the foregoing description.

In particular, device 1 is assembled easily and quickly, by virtue of intermediate element 4, to which control lever 5 is preassembled by means of pin 24, being simply placed onto supporting element 2 so that pins 9 engage respective seats 60, and by virtue of pins 9 being locked inside respective seats 60 by simply pressing fast-fit elements 64 inside respective openings 62 of seats 60.

Stabilizing device 85 is also formed with no increase in the number of components, and without complicating assembly of the device.

Assembly of the device is further simplified by control lever 5 being formed in one piece from plastic material, and integrally comprising parts which in known devices would be made separately and then assembled, e.g. grip 15, spherical head 17 for connection to cable 47, and seat 20 for hinge pin 24.

As such, the present invention provides for simplifying production and assembly, and so reducing overall cost.

Finally, the overall weight of device 1 is reduced by forming the main parts (lever 5, supporting element 2, intermediate element 4) from plastic material.

Clearly, changes may be made to device 1 as described and illustrated herein without, however, departing from the scope of the present invention.

## Claims

1. A vehicle gearbox control device (1) comprising:
a supporting element (2) fitted to the vehicle body (3);
an intermediate element (4);
hinge connecting means (9, 60) for hinging said intermediate element (4) to said supporting element (2), and defining a first axis (A) of rotation of said intermediate element (4) in relation to said supporting element (2); and
a control lever (5) fitted to and rotatable in relation to said intermediate element (4) about a pin (24) defining a second axis (B) of rotation perpendicular to said first axis (A);
characterized in that said hinge connecting means for hinging said intermediate element (4) to said supporting element (2) comprise at least one pin (9) integral with one (4) of said elements; a corresponding seat (60) formed in the other (2) of said elements, and presenting a radial opening (62) for inserting said pin (9) crosswise in relation to said first axis (A); and fast-fit means (64; 74; 80) for locking said pin (9) inside said seat (60).

2. A device as claimed in Claim 1, characterized in that said fast-fit means comprise a fast-fit element (64; 74; 80) presenting an intermediate portion (65; 75; 81) cooperating with said pin (9), and a pair of end portions (67; 76; 83) which snap onto respective complementary retaining means (71; 79; 84b) formed on either side of said seat (60).

3. A device as claimed in Claim 1 or 2, characterized in that it comprises means (61, 63) for axially positioning said pin (9) in relation to said seat (60).

4. A device as claimed in Claim 3, characterized in that said axial positioning means comprise an annular groove (63) formed on said pin (9); and a portion (61) defining said seat (60) and engaging said groove (63).

5. A device as claimed in any one of the foregoing Claims, characterized in that said hinge connecting means comprise two coaxial said pins (9) on said intermediate element (4); and two corresponding said seats (60) formed in said supporting element (2).

6. A device as claimed in any one of the foregoing Claims, characterized in that it comprises means (85) for stabilizing a number of predetermined angular positions of said control lever (5) and said intermediate element (4) in relation to said supporting element (2).

7. A device as claimed in Claim 6, characterized in that said stabilizing means (85) comprise respective portions (86, 87) of said supporting element (2) and said intermediate element (4), said portions facing each other in the direction of said first axis (A); one (87) of said portions presenting a projection (88); the other (86) of said portions presenting a number of recesses (89) for receiving said projection (88) and spaced along a circumference with its center at said first axis (A); and at least one (87) of said portions being flexible to permit said projection (88) to snap inside one of said recesses (89).

8. A device as claimed in any one of the foregoing Claims, characterized in that said control lever (5) is made in one piece from plastic material.

9. A device as claimed in any one of the foregoing Claims, characterized in that said supporting element (2) and said intermediate element (4) are made of plastic material.
